# EUROPÄISCHE PATENTSCHRIFT

(11) **EP 0 857 762 B1**
(45) Veröffentlichungstag und Bekanntmachung des Hinweises auf die Patenterteilung: **02.01.2002**
(21) Anmeldenummer: 98810060.8
(22) Anmeldetag: 29.01.1998
(51) Int. Cl.: C09B 62/09

(54) **Wässrige Reaktivfarbstoff-Formulierungen sowie Verfahren zum Färben und Bedrucken von textilen Fasermaterialien**
Aqueous formulations of reactive dyes and processes for colouring and printing fibrous textile materials
Formulations aqueuses de colorants réactifs et procédés de teinture et d'impression de materiaux fibreux textiles

(30) Priorität: 07.02.1997 CH 27397
(43) Veröffentlichungstag der Anmeldung: 12.08.1998
(73) Patentinhaber: Ciba Specialty Chemicals Holding Inc., 4057 Basel (CH)
(72) Erfinder: Klier, Herbert, 79588 Efringen-Kirchen (DE); Tzikas, Athanassios, 4133 Pratteln (CH)

(56) Entgegenhaltungen:
- EP-A- 0 252 508
- EP-A- 0 478 503
- EP-A- 0 503 339
- GB-A- 2 289 053

## Beschreibung

Die vorliegende Erfindung betrifft ein neues Verfahren zum Färben oder Bedrucken von textilen Fasermaterialien sowie wässrige Formulierungen.

Die Praxis des Färbens mit Reaktivfarbstoffen hat in neuerer Zeit zu erhöhten Anforderungen an die Qualität der Färbungen und die Wirtschaftlichkeit des Färbeprozesses geführt.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen.

Der vorliegenden Erfindung liegt daher die Aufgabe zugrunde, ein neues, verbessertes Verfahren für das Färben und Bedrucken von Fasermaterialien zu finden. Die verwendeten Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Die EP-A-0 252 508 offenbart ein Verfahren zum Färben von Fasermaterialien, worin ein Reaktivfarbstoff verwendet wird, der zwei miteinander über jeweils einen 3-(β-Sulfatoethylsulfonyl)anilinhaltigen Triazinylrest verbrückte Hydroxypyridonazofarbstoffreste enthält.

Gegenstand der vorliegenden Erfindung sind konzentrierte, wässrige Formulierungen, dadurch gekennzeichnet, dass sie 5 bis 50 Gew.-% mindestens eines Reaktivfarbstoffe der Formel 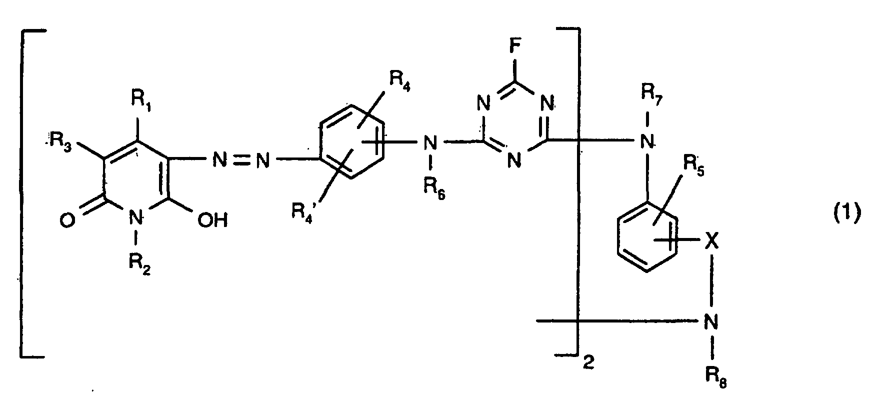 enthalten, worin
R₁ und R₂ C₁-C₄-Alkyl bedeuten,
R₃ Cyano, Carbamoyl oder Sulfomethyl ist,
R₄ und R₄' unabhängig voneinander Wasserstoff, Sulfo, C₁-C₄-Alkyl, C₁-C₄-Alkoxy oder Halogen sind,
R₅ Wasserstoff, C₁-C₄-Alkyl, C₁-C₄-Alkoxy oder Halogen ist,
R₆, R₇ und R₈ Wasserstoff oder C₁-C₄-Alkyl sind und
X die direkte Bindung oder einen Rest der Formel -(CH₂)₁₋₄- bedeutet.

Als C₁-C₄-Alkylreste kommen für R₁, R₂, R₄, R₄', R₅, R₆, R₇ und R₈ z.B. Methyl, Aethyl, Propyl, Isopropyl, Butyl, sek.-Butyl, tert.-Butyl oder Isobutyl, insbesondere Methyl oder Aethyl, in Betracht.

Als C₁-C₄-Alkoxy kommen für R₄, R₄' und R₅ z.B. Methoxy, Äthoxy, Propoxy, Isopropoxy, Butoxy oder lsobutoxy, insbesondere Methoxy, in Betracht.

Als Halogen kommen für R₄, R₄' und R₅ Fluor, Chlor oder Brom, insbesondere Chlor, in Betracht.

R₁ ist bevorzugt Methyl. Bei dem Rest R₂ ist die Bedeutung als Aethyl bevorzugt.

Bei dem Rest R₃ handelt es sich bevorzugt um Sulfomethyl.

R₄ ist vorzugsweise Wasserstoff oder Sulfo, insbesondere Sulfo. R₄' ist vorzugsweise Wasserstoff oder Sulfo, insbesondere Wasserstoff.

R₅ ist vorzugsweise Wasserstoff, C₁-C₄-Alkyl oder C₁-C₄-Alkoxy, insbesondere Wasserstoff.

R₆, R₇ und R₈ sind bevorzugt Wasserstoff.

X ist bevorzugt die direkte Bindung oder ein Rest der Formel -(CH₂)-, insbesondere die direkte Bindung.

Bevorzugt sind die verwendeten Reaktivfarbstoffe der Formel (1), worin R₁ Methyl, R₂ Aethyl, R₃ Sulfomethyl, R₄ Sulfo, R₄', R₅, R₆, R₇ und R₈ Wasserstoff und X die direkte Bindung ist.

Besonders bevorzugt sind als verwendete Reaktivfarbstoffe der Formel (1) solche der Formel 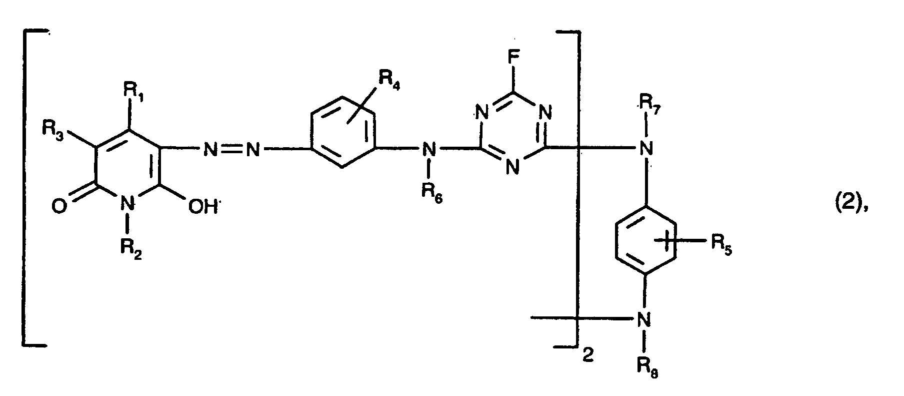 worin für R₁, R₂, R₃, R₄, R₅, R₆, R₇ und R₈ die oben angegebenen Bedeutungen und Bevorzugungen gelten.

Ganz besonders bevorzugt sind die verwendeten Reaktivfarbstoffe der Formel

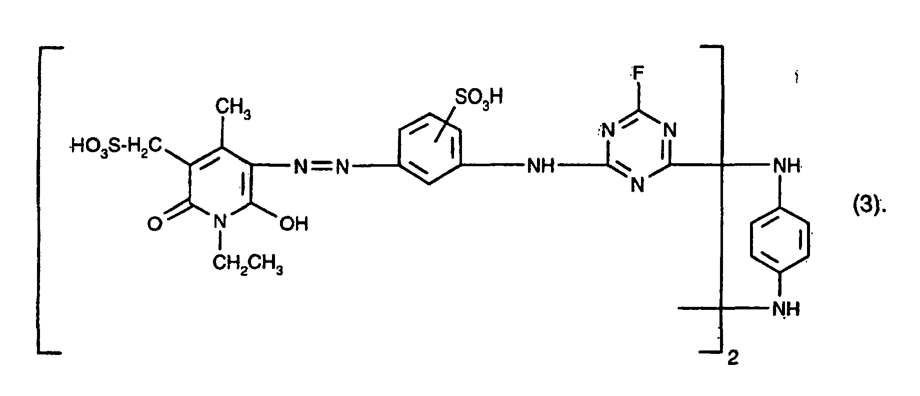

Die verwendeten Reaktivfarbstoffe enthalten vorzugsweise zwei bis vier, insbesondere vier Sulfogruppen, welche jeweils entweder in Form ihrer freien Säure oder vorzugsweise als deren Salze vorliegen. Als Salze kommen beispielsweise die Alkali-, Erdalkali- oder Ammoniumsalze, Salze eines organischen Amins oder Mischungen davon in Betracht. Als Beispiele seien Natrium-, Lithium-, Kalium- oder Ammoniumsalze sowie das Salz des Mono-, Di- oder Triäthanolamins genannt.

Die verwendeten Farbstoffe sind faserreaktiv. Unterfaserreaktiven Verbindungen sind solche zu verstehen, die mit den Hydroxylgruppen der Cellulose, den Amino-, Carboxy-, Hydroxy- oder Thiolgruppen bei Wolle und Seide, oder mit den Amino- und gegebenenfalls mit den Carboxygruppen von synthetischen Polyamiden unter Bildung kovalenter chemischer Bindungen zu reagieren vermögen.

Die verwendeten Farbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die verwendeten Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die verwendeten Farbstoffe zum Färben oder Bedrucken von cellulosehaltigen Fasermaterialien, insbesondere baumwollhaltigen Fasermaterialien.

Es können die üblichen Färbe- bzw. Druckverfahren verwendet werden. Die Färbeflotten oder Druckpasten können ausser Wasser und den Farbstoffen weitere Zusätze, beispielsweise Netzmittel, Antischaummittel, Egalisiermittel oder die Eigenschaft des Textilmaterials beeinflussende Mittel, wie z.B. Weichmachungsmittel, Zusätze zum Flammfestausrüsten oder schmutz-, wasser- und öl-abweisende Mittel sowie wasserenthärtende Mittel und natürliche oder synthetische Verdicker, wie z.B. Alginate und Celluloseäther, enthalten.

Für das Verfahren können die Mengen, in denen die Reaktivfarbstoffe in den Färbebädern verwendet werden, je nach der gewünschten Farbtiefe schwanken, im allgemeinen haben sich Mengen von 0,01 bis 10 Gewichtsprozent, insbesondere 0,01 bis 6 Gewichtsprozent, bezogen auf das Färbegut, als vorteilhaft erwiesen.

Bevorzugt für das Verfahren ist das Färben, insbesondere das Färben nach dem Ausziehverfahren.

Gemäss dem Ausziehverfahren erfolgt das Färben in der Regel in wässrigem Medium, bei einem Flottenverhältnis von beispielsweise 1:2 bis 1:60, insbesondere einem Flottenverhältnis von 1:5 bis 1:20, und einer Temperatur von 20 bis 105°C, insbesondere 30 bis 90°C, und vorzugsweise 40 bis 80°C.

In Betracht kommt ferner das Foulard-Färbeverfahren, wonach die Ware in der Regel mit wässrigen, gegebenenfalls salzhaltigen Farbstofflösungen imprägniert wird. Die Flottenaufnahme beträgt hierbei z.B. 20 bis 150%, insbesondere 40 bis 120% und vorzugsweise 50 bis 100%, bezogen auf das Gewicht des zu färbenden Fasermaterials: Gegebenenfalls enthält die Flotte bereits Fixieralkali, oder das Fasermaterial wird nach der Imprägnierung mit Fixieralkali behandelt. Als Alkali kommen z.B. Natriumcarbonat, Natriumbicarbonat, Natriumhydroxid, Dinatriumphosphat, Trinatriumphosphat, Borax, wässriges Ammoniak, Natriumtrichloracetat, Natriumformiat oder eine Mischung aus Wasserglas und einer wässrigen Natriumcarbonatlösung in Betracht. Bevorzugt sind hierbei Alkalihydroxid und/oder Alkalicarbonat, insbesondere Natriumhydroxid und/oder Natriumcarbonat.

Die Fixierung kann beispielsweise durch Wärmeeinwirkung, wie durch Dämpfen des imprägnierten Fasermaterials bei einer Temperatur von z.B. 100 bis 120°C, vorzugsweise im Sattdampf, erfolgen. Gemäss dem sogenannten Kaltverweilverfahren wird der Farbstoff zusammen mit dem Alkali auf dem Foulard aufgebracht und danach durch mehrstündiges Lagern, z.B. 3 bis 40 Stunden, bei Raumtemperatur fixiert. Nach dem Fixieren werden die Färbungen oder Drucke gegebenenfalls unter Zusatz eines dispergierend wirkenden Mittels gründlich gespült.

Die erhaltenen Färbungen und Drucke zeichnen sich durch ein gutes Aufbauvermögen sowie gute Egalität aus. Die Fixiergrade sind hoch und die nicht fixierten Anteile können leicht ausgewaschen werden, wobei die Differenz zwischen Ausziehgrad und Fixiergrad klein, d.h. der Seifverlust gering ist. Die gemäss dem Verfahren erhaltenen Färbungen und Drucke besitzen eine hohe Farbstärke und eine hohe Faser-Farbstoff-Bindungsstabilität, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Gegenstand der vorliegenden Erfindung ist daher ein Verfahren zum Färben oder Bedrucken von hydroxylgruppenhaitigen oder stickstoffhaltigen Fasermaterialien, dadurch gekennzeichnet, dass man mindestens einen Reäktivfarbstoff der Formel (1) verwendet, worin
R₁ und R₂ C₁-C₄-Alkyl bedeuten,
R₃ Cyano, Carbamoyl oder Sulfomethyl ist,
R₄ und R₄' unabhängig voneinander Wasserstoff, Sulfo, C₁-C₄-Alkyl, C₁-C₄-Alkoxy oder Halogen sind,
R₅ Wasserstoff, C₁-C₄-Alkyl, C₁-C₄-Alkoxy oder Halogen ist,
R₆, R₇ und R₈ Wasserstoff oder C₁-C₄-Alkyl sind und
X die direkte Bindung bedeutet.

Für die Reaktivfarbstoffe der Formel (1) gelten hierbei die oben angegebenen Bedeutungen und Bevorzugungen.

Bevorzugt enthalten die erfindungsgemässen wässrigen Formulierungen 5 bis 40 Gew.-%, insbesondere 10 bis 40 Gew.-% und vorzugsweise 10 bis 30 Gew.-% mindestens eines Reaktivfarbstoffs der Formel (1).

Die Formulierungen sind vorzugsweise auf einen pH-Wert von 3 bis 8, insbesondere 3 bis 7 und vorzugsweise 4 bis 7 gestellt. Die Einstellung des pH-Wertes erfolgt mit einem Puffer, wie z.B. durch Zusatz eines Polyphosphats oder eines Hydrogen/Dihydrogenphosphat-Puffers. Als weitere Puffer seien Natrium- oder Kaliumacetat, Natrium- oder Kaliumoxalat und Natriumborat sowie deren Mischungen genannt.

Ferner können die Formulierungen noch eine die Wasserlöslichkeit des Farbstoffs verbessernde Komponente, wie z.B. ε-Caprolactam oder N-Methylpyrrolidon, enthalten. Diese Komponenten werden in der Regel in einer Menge von 0,1 bis 30 Gew-%, bezogen auf das Gesamtgewicht der Formulierung, verwendet.

Weiterhin können die Formulierungen eigenschaftsverbessemde Hilfsmittel, wie z.B. Tenside, schaumdämpfende Hilfsmittel, Frostschutzmittel oder das Pilz- und/oder Bakterienwachstum verhindernde Mittel, enthalten. Diese Hilfsmittel sind in der Regel in geringen Mengen, wie z.B. je ca. 1 bis 10 g/l, enthalten.

Die erfindungsgemässen Formulierungen sind über einen längeren Zeitraum lagerstabil, dünnflüssig und können insbesondere in den oben angegebenen Verfahren zum Färben verwendet werden.

Die verwendeten Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist.

Die mit den verwendeten Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Erläuterungsbeispiel 1: Es werden 44,7 Teile der Verbindung der Formel

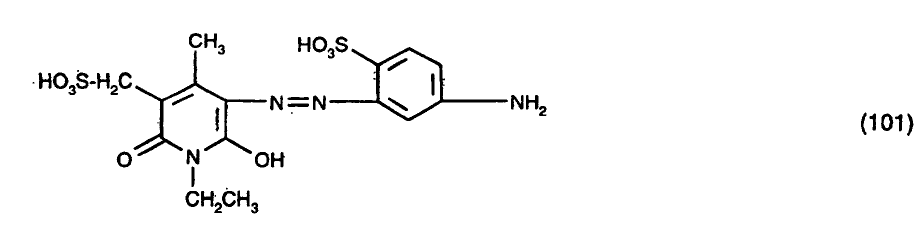

in 300 Teilen Wasser unter Zusatz von ca. 13 Teilen einer 5-nomnalen, wässrigen Natriumhydroxidlösung und ca. 5 Teilen Trinatriumphosphat gelöst. Anschliessend werden bei einer Temperatur von 0°C 6,9 Teile Cyanurftuorid zugetropft, wobei der pH-Wert durch Zugabe von 5-normaler, wässriger Natriumhydroxidlösung konstant gehalten wird. Nach beendeter Reaktion tropft man bei einer Temperatur von 0°C eine Lösung von 5,4 Teilen 1,4-Phenylendiamin in 150 Teilen Wasser derart zu, dass der pH einen Wert von 7 nicht übersteigt und hält den pH bei einem Wert von 7. Man lässt auf Raumtemperatur erwärmen, befreit die Lösung dialytisch von Salz und gefriertrocknet das erhaltene Produkt. Man erhält einen Farbstoff, der in Form der freien Säure der Formel 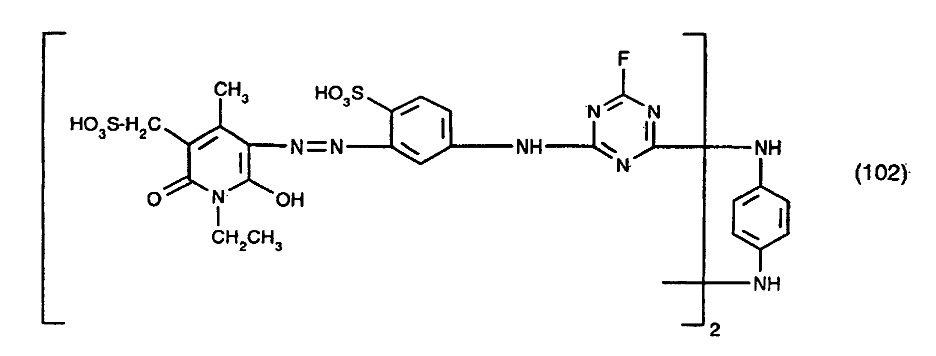 entspricht. Der erhaltene Farbstoff färbt Baumwolle in gelben Farbtönen.

Erläuterungsbeispiele 2 bis 10: In analoger Weise zu den Angaben in Erläuterungsbeispiel 1 können die in der folgenden Tabelle in Spalte 2 angegebenen Farbstoffe erhalten werden, welche Baumwolle in gelben Farbtönen färben.

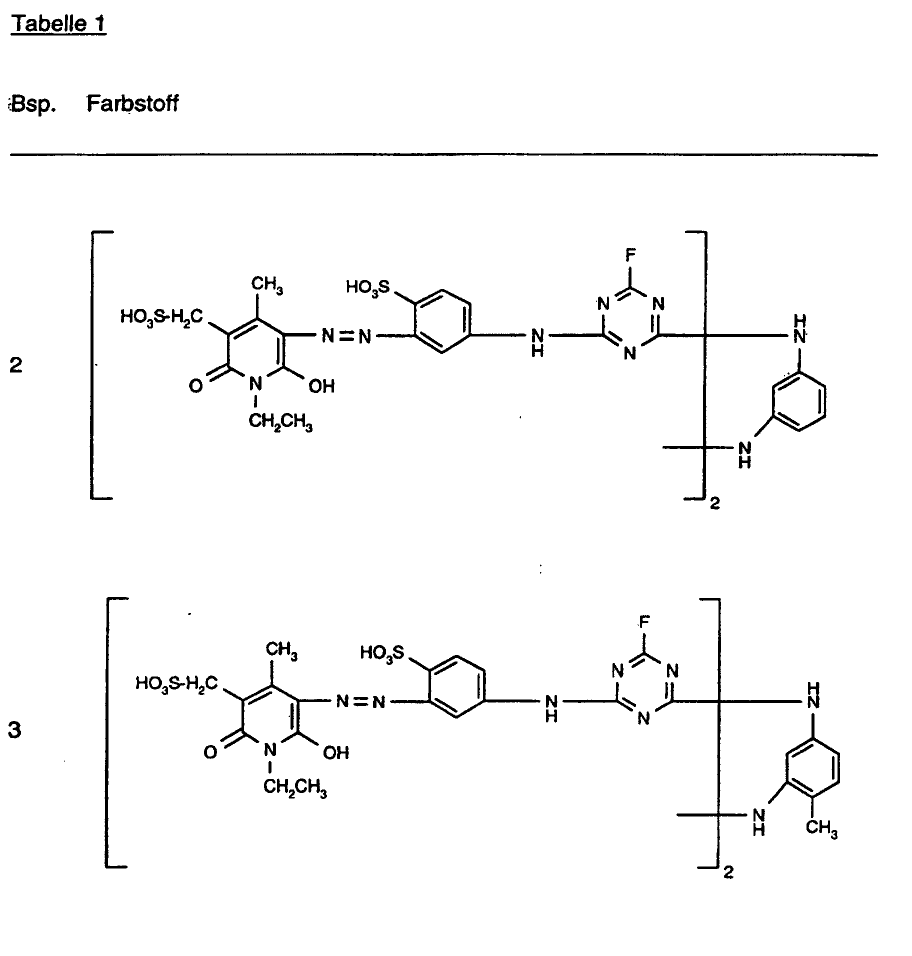

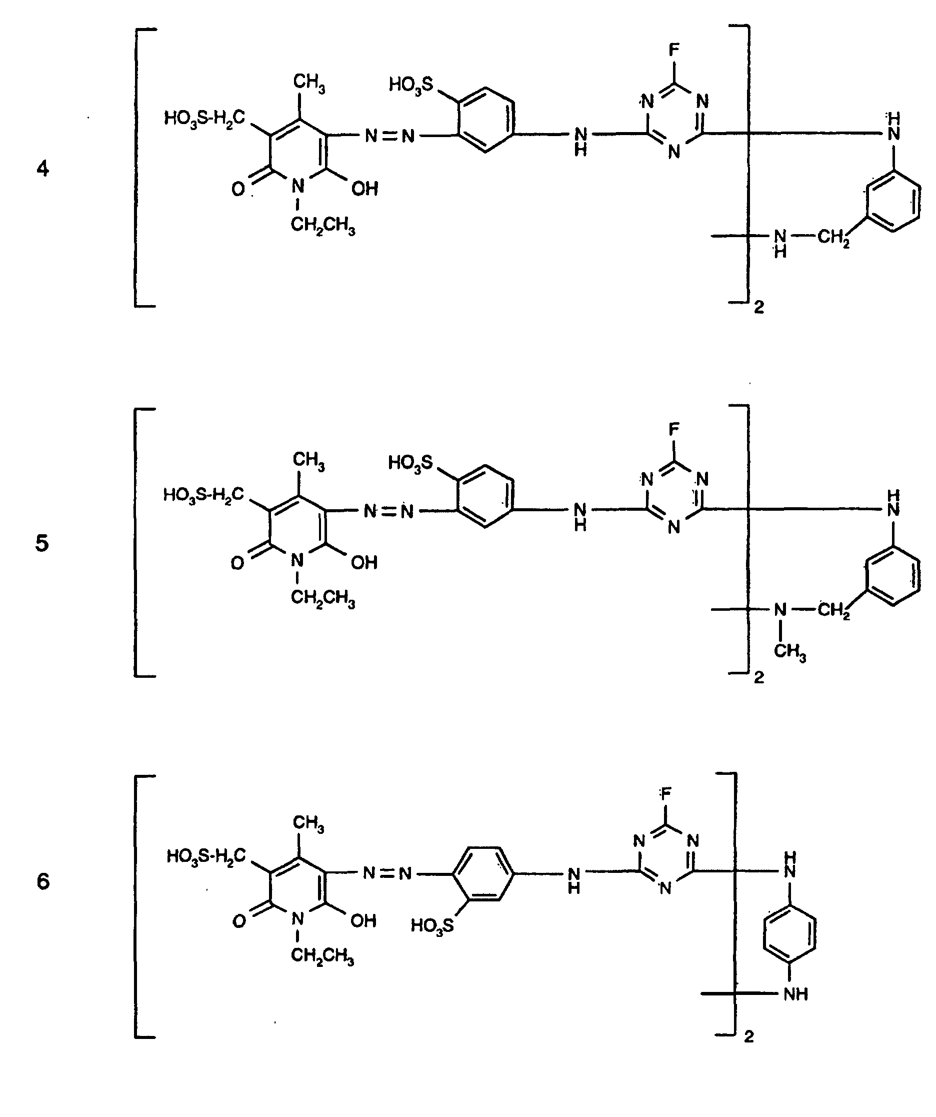

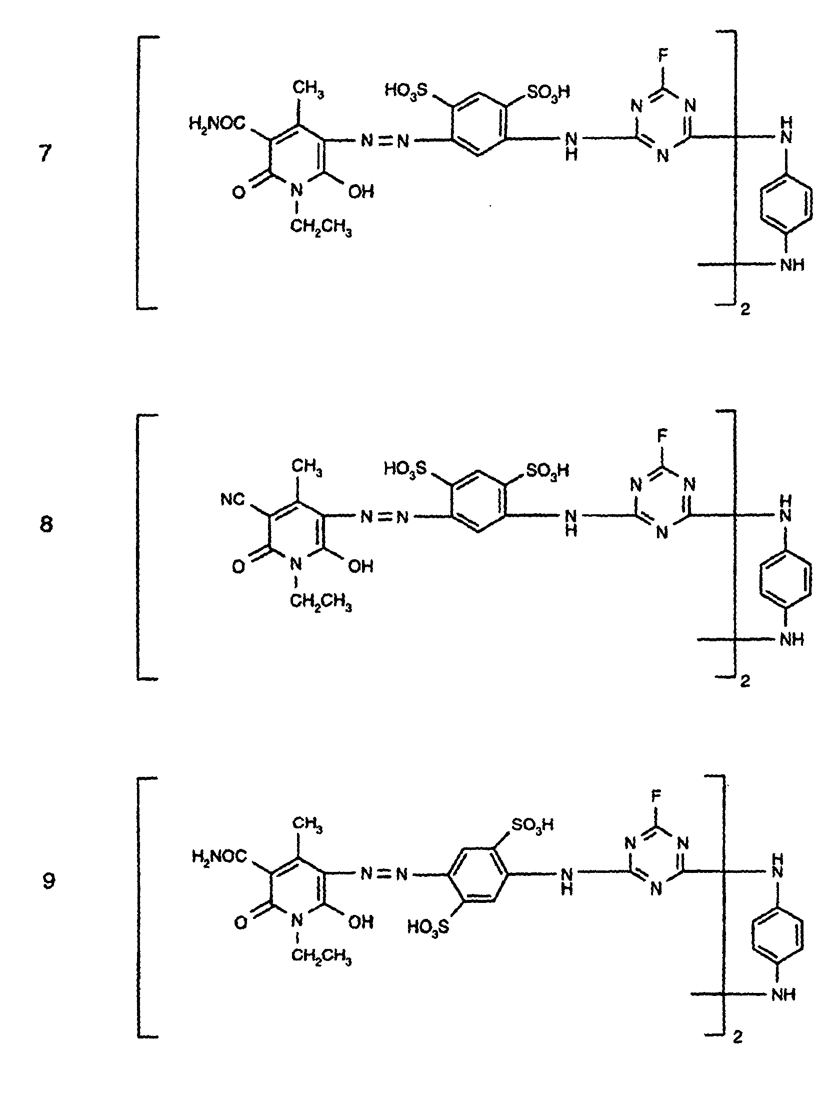

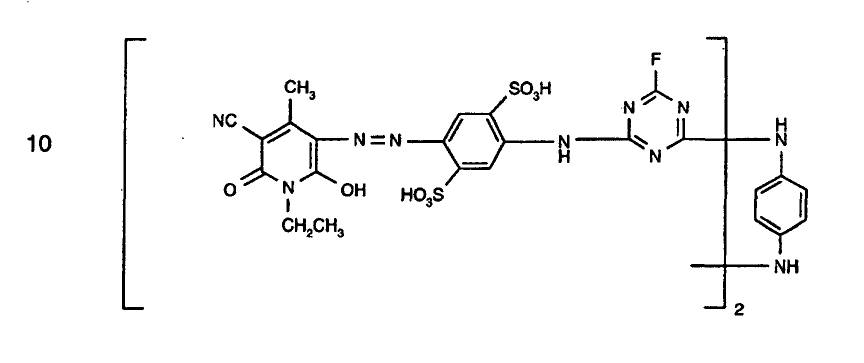

### Färbevorschrift

2 Teile des gemäss Erläuterungsbeispiel 1 erhaltenen Farbstoffes der Formel (102) und 20 Teile Natriumchlorid werden bei einer Temperatur von 70°C in 1000 Teilen Wasser gelöst. In dieses Färbebad geht man mit 100 Teilen Baumwallgewebe ein und hält die Temperatur 30 Minuten bei 70°C. Anschliessend werden 4 Teile kalziniertes Soda zugegeben und die Temperatur wird weitere 15 Minuten bei 70°C gehalten. Nach Zugabe von 8 Teilen kalziniertem Soda wird weitere 45 Minuten bei 70°C gefärbt und dann die Ware in üblicher Weise gespült und getrocknet.

### Druckvorschrift

3 Teile des gemäss Erläuterungsbeispiel 1 erhaltenen Farbstoffes der Formel (102) werden unter schnellem Rühren in 100 Teile einer Stammverdickung, enthaltend 50 Teile 5%ige Natriumalginatverdickung, 27,8 Teile Wasser, 20 Teile Hamstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Konzentrierte, wässrige Formulierungen, **dadurch gekennzeichnet, dass** sie 5 bis 50 Gew.-% mindestens eines Reaktivfarbstoffs der Formel 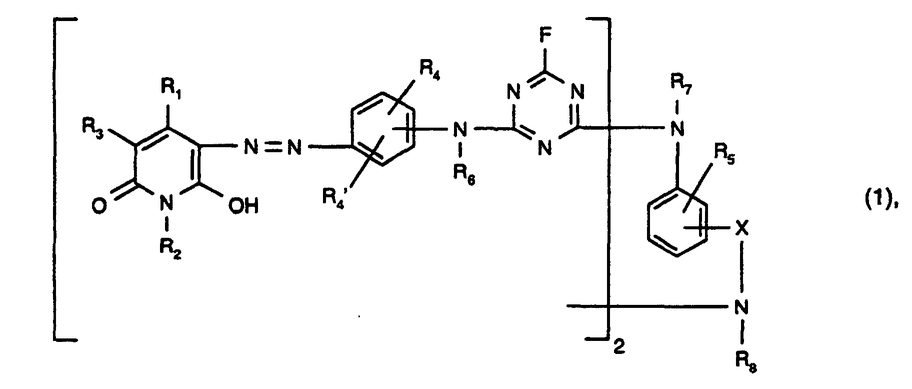 enthalten, worin
R₁ und R₂ C₁-C₄-Alkyl bedeuten,
R₃ Cyano, Carbamoyl oder Sulfomethyl ist,
R₄ und R₄' unabhängig voneinander Wasserstoff, Sulfo, C₁-C₄-Alkyl, C₁-C₄-Alkoxy oder Halogen sind,
R₅ Wasserstoff, C₁-C₄-Alkyl, C₁-C₄-Alkoxy oder Halogen ist,
R₆, R₇ und R₈ Wasserstoff oder C₁-C₄-Alkyl sind und
X die direkte Bindung oder einen Rest der Formel -(CH₂)₁₋₄- bedeutet.

2. Konzentrierte, wässrige Formulierungen gemäss Anspruch 1, **dadurch gekennzeichnet, dass**
R₁ Methyl und R₂ Aethyl ist

3. Konzentrierte, wässrige Formulierungen gemäss einem der Ansprüche 1 und 2, **dadurch gekennzeichnet, dass**
R₃ Sulfomethyl ist.

4. Konzentrierte, wässrige Formulierungen gemäss einem der Ansprüche 1 bis 3, **dadurch gekennzeichnet, dass**
R₄ Sulfo und R₄' Wasserstoff oder Sulfo ist.

5. Konzentrierte, wässrige Formulierungen gemäss einem der Ansprüche 1 bis 4, **dadurch gekennzeichnet, dass**
R₅ Wasserstoff ist.

6. Konzentrierte, wässrige Formulierungen gemäss einem der Ansprüche 1 bis 5, **dadurch gekennzeichnet, dass**
R₆, R₇ und R₈ Wasserstoff sind.

7. Konzentrierte, wässrige Formulierungen gemäss einem der Ansprüche 1 bis 6, **dadurch gekennzeichnet, dass**
X die direkte Bindung ist.

8. Konzentrierte, wässrige Formulierungen gemäss Anspruch 1, **dadurch gekennzeichnet, dass**
R₁ Methyl, R₂ Aethyl, R₃ Sulfomethyl, R₄ Sulfo, R₄', R₅, R₆, R₇ und R₈ Wasserstoff und X die direkte Bindung ist.

9. Konzentrierte, wässrige Formulierungen gemäss Anspruch 1, **dadurch gekennzeichnet, dass** sie einen Farbstoff der Formel 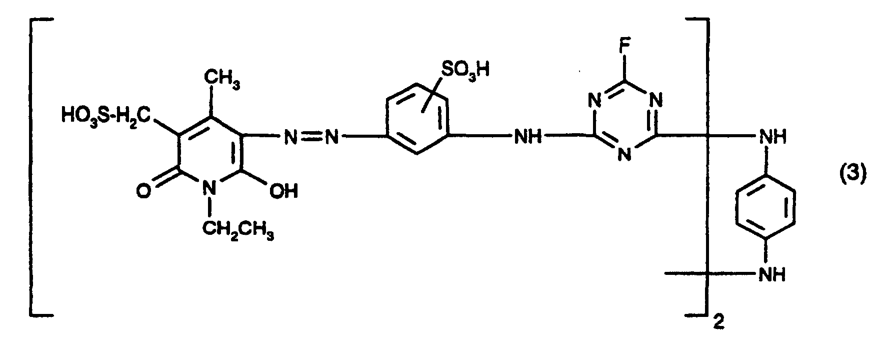 enthalten.

10. Konzentrierte, wässrige Formulierungen gemäss Anspruch 1, **dadurch gekennzeichnet, dass** sie 10 bis 30 Gew.-% mindestens eines Reaktivfarbstoffs der Formel (1) enthalten.

11. Verfahren zum Färben oder Bedrucken von hydroxylgruppenhaltigen oder stickstoffhaltigen Fasermaterialien, **dadurch gekennzeichnet, dass** man mindestens einen Reaktivfarbstoff der Formel 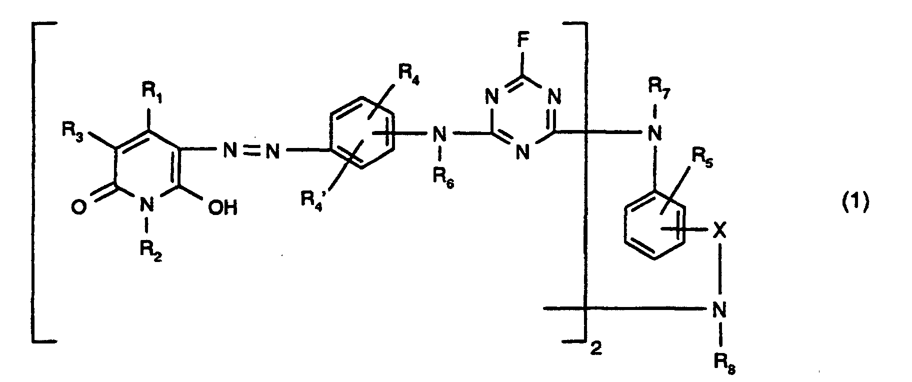 verwendet, worin
R₁ und R₂ C₁-C₄-Alkyl bedeuten,
R₃ Cyano, Carbamoyl oder Sulfomethyt ist,
R₄ und R₄' unabhängig voneinander Wasserstoff, Sulfo, C₁-C₄-Alkyl, C₁-C₄-Alkoxy oder Halogen sind,
R₅ Wasserstoff, C₁-C₄-Alkyl, C₁-C₄-Alkoxy oder Halogen ist,
R₈, R₇ und R₈ Wasserstoff oder C₁-C₄-Alkyl sind und
X die direkte Bindung bedeutet.

12. Verfahren gemäss Anspruch 11, **dadurch gekennzeichnet, dass** man cellulosehaltige Fasermaterialien, insbesondere baumwolihaltige Fasermaterialien, nach dem **Ausziehverfahren färbt**.

## Claims

1. A concentrated aqueous formulation that contains from 5 to 50 % by weight of at least one reactive dye of formula 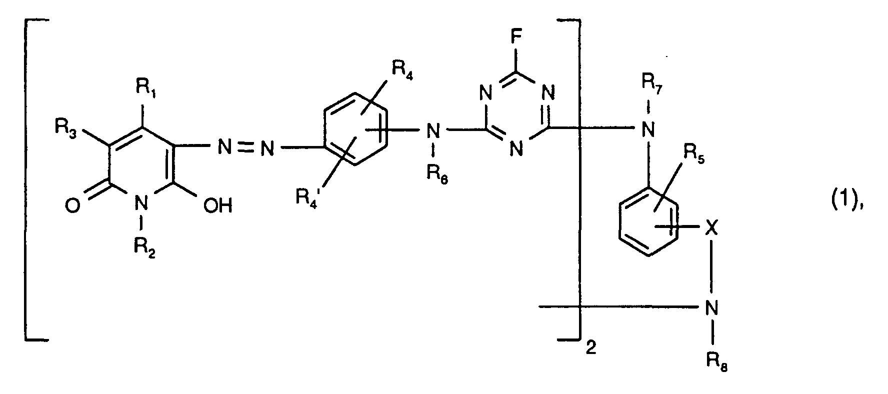 wherein
R₁ and R₂ are C₁-C₄alkyl,
R₃ is cyano, carbamoyl or sulfomethyl,
R₄ and R₄' are each independently of the other hydrogen, sulfo, C₁-C₄alkyl, C₁-C₄alkoxy or halogen,
R₅ is hydrogen, C₁-C₄alkyl, C₁-C₄alkoxy or halogen,
R₆, R₇ and R₈ are hydrogen or C₁-C₄alkyl, and
X is a direct bond or a radical of the formula -(CH₂)₁₋₄-.

2. A concentrated aqueous formulation according to claim 1, wherein
R₁ is methyl and R₂ is ethyl.

3. A concentrated aqueous formulation according to either claim 1 or claim 2, wherein
R₃ is sulfomethyl.

4. A concentrated aqueous formulation according to any one of claims 1 to 3, wherein
R₄ is sulfo and R₄' is hydrogen or sulfo.

5. A concentrated aqueous formulation according to any one of claims 1 to 4, wherein
R₅ is hydrogen.

6. A concentrated aqueous formulation according to any one of claims 1 to 5, wherein
R₆, R₇ and R₈ are hydrogen.

7. A concentrated aqueous formulation according to any one of claims 1 to 6, wherein
X is a direct bond.

8. A concentrated aqueous formulation according to claim 1, wherein
R₁ is methyl, R₂ is ethyl, R₃ is sulfomethyl, R₄ is sulfo, R₄', R₅, R₆, R₇ and R₈ are hydrogen and X is a direct bond.

9. A concentrated aqueous formulation according to claim 1 that comprises a dye of formula

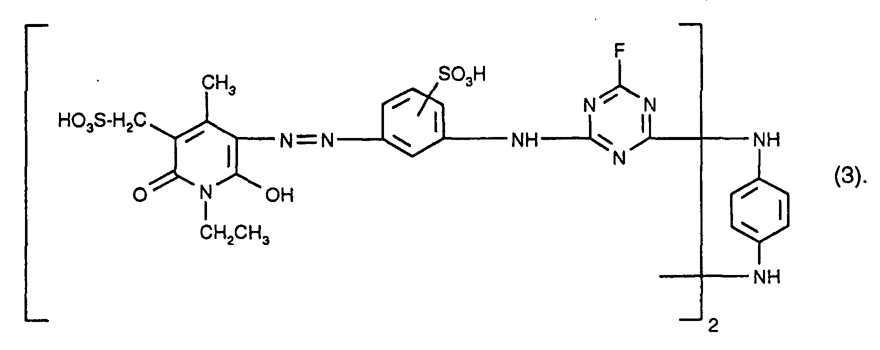

10. A concentrated aqueous formulation according to claim 1 that contains from 10 to 30 % by weight of at least one reactive dye of formula (1).

11. A process for dyeing or printing hydroxy-group-containing or nitrogen-containing fibre materials, which process comprises using at least one reactive dye of formula 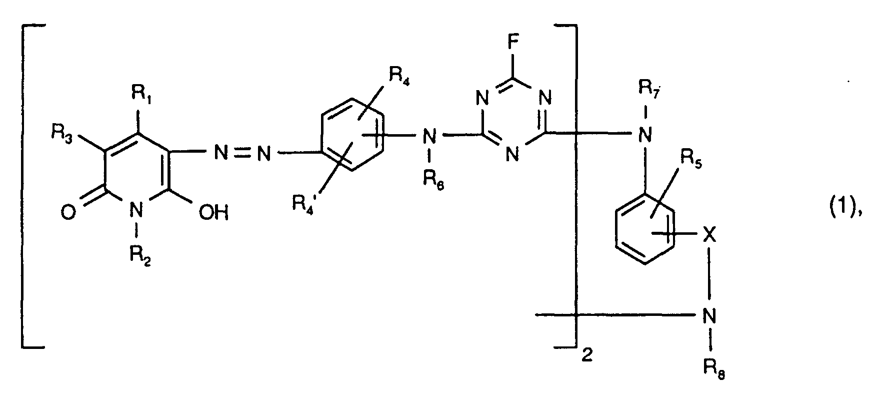 wherein
R₁ and R₂ are C₁-C₄alkyl,
R₃ is cyano, carbamoyl or sulfomethyl,
R₄ and R₄' are each independently of the other hydrogen, sulfo, C₁-C₄alkyl, C₁-C₄alkoxy or halogen,
R₅ is hydrogen, C₁-C₄alkyl, C₁-C₄alkoxy or halogen,
R₆, R₇ and R₈ are hydrogen or C₁-C₄alkyl, and
X is a direct bond.

12. A process according to claim 11 that comprises dyeing cellulosic fibre materials, especially cotton-containing fibre materials, using the exhaust process.

## Revendications

1. Formulations aqueuses, concentrées, **caractérisées en ce qu'**elles contiennent de 5 à 50 % en masse d'au moins un colorant réactif de formule 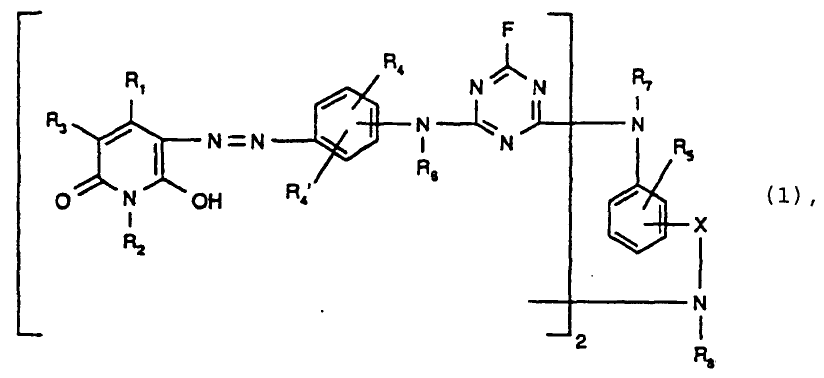
R₁ et R₂ représentent un groupe alkyle en C₁-C₄,
R₃ représente des groupes cyano, carbamoyle ou sulfométhyle,
R₄ et R₄' représentent, indépendamment l'un de l'autre, un atome d'hydrogène, des groupes sulfo, alkyle en C₁-C₄, alkoxy en C₁-C₄ ou halogène,
R₅ représente un atome d'hydrogène, des groupes alkyle en C₁-C₄, alkoxy en C₁-C₄ ou halogène,
R₆, R₇ et R₈ représentent un atome d'hydrogène ou un groupe alkyle en C₁-C₄, et
X représente la liaison directe ou un reste de formule - (CH₂)₁₋₄-.

2. Formulations aqueuses, concentrées, selon la revendication 1, **caractérisées en ce que**
R₁ représente un groupe méthyle et R₂ représente un groupe éthyle.

3. Formulations aqueuses, concentrées, selon l'une des revendications 1 ou 2, **caractérisées en ce que**
R₃ représente un groupe sulfométhyle.

4. Formulations aqueuses, concentrées, selon l'une des revendications 1 à 3, **caractérisées en ce que**
R₄ représente un groupe sulfo et R₄' représente un atome d'hydrogène ou un groupe sulfo.

5. Formulations aqueuses, concentrées, selon l'une des revendications 1 à 4, **caractérisées en ce que**
R₅ représente un atome d'hydrogène.

6. Formulations aqueuses, concentrées, selon l'une des revendications 1 à 5, **caractérisées en ce que**
R₆, R₇ et R₈ représentent des atomes d'hydrogène.

7. Formulations aqueuses, concentrées, selon l'une des revendications 1 à 6, **caractérisées en ce que**
X représente la liaison directe.

8. Formulations aqueuses, concentrées, selon la revendication 1, **caractérisées en ce que**
R₁ représente un groupe méthyle, R₂ représente un groupe éthyle, R₃ représente un groupe sulfométhyle, R₄ représente le groupe sulfo, R₄', R₅, R₆, R₇ et R₈ représentent l'atome d'hydrogène.

9. Formulations aqueuses, concentrées, selon la revendication 1, **caractérisées en ce qu'**elles
contiennent un colorant de formule

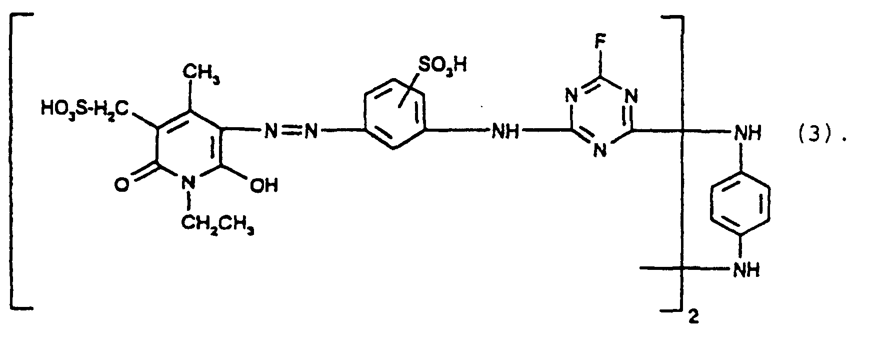

10. Formulations aqueuses, concentrées, selon la revendication 1, **caractérisées en ce qu'**elles contiennent 10 à 30 % en masse d'au moins un colorant réactif de formule (1).

11. Procédé pour la teinture ou l'impression de matières fibreuses contenant des groupes hydroxyle ou azotées, **caractérisé en ce qu'**on utilise au moins un colorant réactif de formule 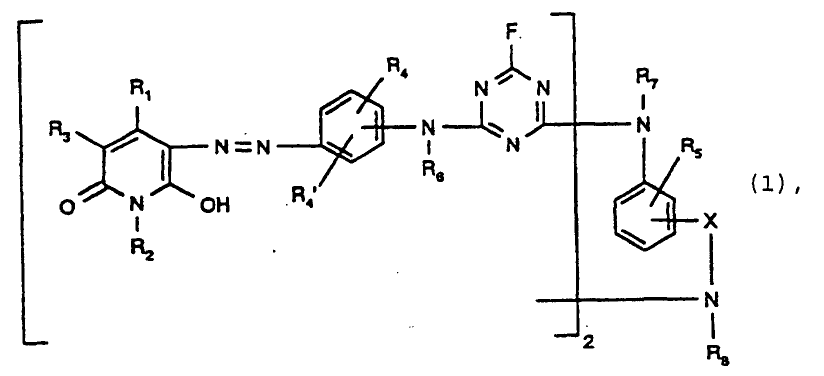 où
R₁ et R₂ représentent un groupe alkyle en C₁-C₄,
R₃ représente des groupes cyano, carbamoyle ou sulfométhyle,
R₄ et R₄' représentent, indépendamment l'un de l'autre, un atome d'hydrogène, des groupes sulfo, alkyle en C₁-C₄, alkoxy en C₁-C₄ ou halogène,
R₅ représente un atome d'hydrogène, des groupes alkyle en C₁-C₄, alkoxy en C₁-C₄ ou halogène,
R₆, R₇ et R₈ représentent un atome d'hydrogène ou un groupe alkyle en C₁-C₄, et
X représente la liaison directe.

12. Procédé selon la revendication 11, **caractérisé en ce qu'**on teint des matières fibrueses cellulosiques, notamment des matières fibreuses contenant du coton, selon le procédé par épuisement.
